# EUROPÄISCHE PATENTANMELDUNG

(11) **EP 2 333 664 A1**
(43) Veröffentlichungstag der Anmeldung: **15.06.2011**
(21) Anmeldenummer: 10188402.1
(22) Anmeldetag: 21.10.2010
(51) Int. Cl.: G06F 9/455, G06F 9/48

(54) **Verfahren zur automatischen Migration von Daten in virtuelle oder physikalische Maschinen**

(30) Priorität: 17.11.2009 DE 102009053643
(71) Anmelder: Fujitsu Technology Solutions Intellectual Property GmbH, 80807 München (DE)
(72) Erfinder: Atzkern, Jürgen, 86505, Münsterhausen (DE); Filimon, Diana, 86368, Gersthofen (DE); Schwarzbauer, Felix, 86529, Schrobenhausen (DE)
(74) Vertreter: Epping - Hermann - Fischer

(57) **Zusammenfassung**

Die Erfindung betrifft ein Verfahren zur Migration von Daten eines Computersystems. Dabei wird ein Abbild von Daten, die in einem ersten Speicher des Computersystems gespeichert sind, erstellt und dieses Abbild in einem zweiten Speicher, der nicht Bestandteil des ersten Speichers ist, gespeichert. Anschließend erfolgt die Wiederherstellung aller Daten aus dem erstellten Abbild auf dem Computersystem oder auf einem weiteren Computersystem. Das Verfahren ist durch ein entsprechendes Computerprogramm zur Migration von Daten, welches auf einem Computersystem abläuft, vollständig automatisierbar.

## Beschreibung

Die Erfindung betrifft ein Verfahren zur Migration von Daten eines Computersystems sowie ein Computerprogramm zur Durchführung eines entsprechenden Verfahrens.

Bei der Veränderung und Modernisierung bestehender Computersysteme, beispielsweise in einer Firma, ist es notwendig, eine Sicherung und Wiederherstellung eines Systemzustandes von einem existierenden Computersystem auf einem neuen Computersystem oder auf demselben Computersystem mit einem neuen Betriebssystem und/oder neuer Hardware durchzuführen. Diesen Vorgang nennt man Migration. Dabei versteht man unter dem Systemzustand alle Daten, die ein oder mehrere Benutzer auf dem ursprünglichen Computersystem angelegt haben, sowie die Einstellungen am Computersystem oder an den installierten Applikationen, die der oder die Benutzer vorgenommen haben. Es ist wünschenswert, dass nach der Migration ein Benutzer seine Einstellungen und gespeicherten Daten derart wiederherstellen kann, dass das gewohnte Arbeitsumfeld für ihn unverändert bleibt und keine Daten verloren gehen.

Zur Durchführung der einzelnen Schritte einer Migration müssen verschiedenste Sicherheitskriterien überwunden werden, die den Eingriff durch einen Benutzer oder einen Administrator nötig machen. So kann ein derartiges Verfahren oftmals nach dem Starten nicht unterbrochen werden, da ansonsten eine Sicherung und/oder Wiederherstellung fehlschlägt. Auch die separate Durchführung einzelner Verfahrensschritte mit unterschiedlichen Software-Bausteinen führt oft zu Kompatibilitätsproblemen, sodass auch hier die Gefahr besteht, dass eine Wiederherstellung fehlschlägt. Nicht zuletzt führt auch die Unsicherheit eines Benutzers bei Abfragen während des Verfahrensablaufs zu fehlerhaften oder unerwünschten Verläufen, die insbesondere nicht mehr rückgängig zu machen sind.

Es ist daher eine Aufgabe der Erfindung, ein Verfahren sowie ein Computerprogramm der eingangs genannten Art zu beschreiben, die eine einfachere und dennoch sichere Migration von Daten ermöglicht.

Diese Aufgabe wird in einem ersten Aspekt durch ein Verfahren zur Migration von Daten eines Computersystems gelöst, umfassend die Schritte:
- Erstellen eines Abbilds von Daten, die in einem ersten Speicher des Computersystems gespeichert sind,
- Speichern des erstellten Abbilds in einem zweiten Speicher, der nicht Bestandteil des ersten Speichers ist,
- Wiederherstellen aller Daten aus dem erstellten Abbild auf dem Computersystem oder auf einem weiteren Computersystem.

Dieses Verfahren zur Migration von Daten hat den Vorteil, dass alle wesentlichen Einzelschritte zur Migration in einem Ablauf vereint sind. Das Verfahren läuft dabei automatisiert ab, sodass Sicherheitskriterien während des Verfahrens ebenfalls automatisiert überwunden werden. Auch Kompatibilitätsprobleme zwischen einzelnen Software-Bausteinen sind damit gegenstandslos. Ein weiterer Vorteil der automatisierten Migration besteht darin, dass das Verfahren vielfach und für unterschiedliche Migrationsbeziehungsweise Installations-Szenarien verwendet werden kann. Das Verfahren kann sowohl so genannte Side-by-Side-Szenarien (alte Hardware ist Quelle, neue Hardware ist Ziel) als auch so genannte Wipe-and-Clean-Szenarien (die Hardware bleibt bestehen) unterstützen.

Der sichere Ablauf der einzelnen Arbeitsschritte - das Erstellen des Abbilds, das Speichern des Abbilds sowie das Wiederherstellen aller Daten - wird dadurch gewährleistet, dass erst automatisch zum nächsten Arbeitsschritt gewechselt wird, falls ein Arbeitsschritt erfolgreich durchlaufen wurde. Ein Administrator oder Benutzer muss dem gesamten Prozess nicht ständig beiwohnen und Entscheidungsabfragen abwarten. Es ist somit denkbar, dass ein derartiges Verfahren beispielsweise über Nacht automatisiert in einer Firma ablaufen kann, wobei ein Benutzer am nächsten Morgen seine auf ein neues Computersystem migrierten und wiederhergestellten Benutzerdaten vorfindet. Dies kann bei einem Server-Client-System innerhalb einer Firma unter Umständen völlig im Hintergrund ablaufen, sodass der benutzerseitige Client unverändert bleibt.

Das erstellte Abbild kann alle Daten beinhalten, die Benutzereinstellungen am System oder an installierten Applikationen sowie sämtliche Daten betreffen, die ein Benutzer im ersten Speicher, beispielsweise auf einer Festplatte des Computersystems gespeichert hat. Der Systemzustand wird gespiegelt und auf einem zweiten Speicher abgelegt, der eine weitere Festplattenpartition des Computersystems, eine USB-Festplatte (USB = Universal Serial Bus) oder ein Netzlaufwerk sein kann. Es ist auch denkbar, dass eine so genannte Peer-to-Peer-Verbindung (P2P), also eine direkte Verbindung zu einem weiteren Computersystem aufgebaut wird, um das erstellte Abbild des Systemzustands auf einen zweiten Speicher des weiteren Computersystems zu transferieren. Der gesicherte Systemzustand kann aus dem zweiten Speicher geladen und auf dem gleichen oder dem weiteren Computersystem - gegebenenfalls nach Modifikationen an der Hardware oder Software - wiederhergestellt werden. Da der zweite Speicher kein Bestandteil des ersten Speichers ist, kann der erste Speicher gefahrlos verändert werden. Der gesicherte Systemzustand wird gewissermaßen auf den zweiten Speicher ausgelagert.

Bevorzugt werden nach dem Speichern des erstellten Abbilds im zweiten Speicher die Daten zumindest in einem Teilbereich des ersten Speichers im Computersystem automatisch gelöscht. Dies ist erforderlich, falls ein weiterer Zugriff auf die Quelldaten auf dem ursprünglichen Computersystem zuverlässig verhindert werden soll. Durch das Löschen der Daten in zumindest einem Teilbereich des ersten Speichers werden zusammenhängende Dateien im ersten Speicher des Computersystems dadurch unbrauchbar gemacht oder vollständig entfernt. Ein Vorteil des vollständigen Löschens besteht auch darin, dass beim Wiederherstellen aller Daten auf dem identischen Computersystem zuvor alle "alten" Daten beseitigt werden, die nach einer Systemänderung (hardware- und/oder softwareseitig) zu Konflikten führen könnten.

Zudem ist es denkbar, die Daten über einen Löschalgorithmus derart zu löschen, dass nicht nur der weitere Zugriff darauf, sondern auch eine Rekonstruktion und Wiederherstellung aller Daten zuverlässig verhindert wird. Dies ist zum Beispiel dann sinnvoll, falls das ursprüngliche Computersystem nicht weiter verwendet wird und entsorgt werden soll. Durch die genannten Maßnahmen wird also vermieden, dass beispielsweise in einem Firmennetzwerk identische Benutzerdaten redundant auftreten und zu Konflikten führen oder ein unbefugter Benutzer Zugriff auf fremde Daten hat.

Vorzugsweise ist ein automatisches Löschen nur möglich, falls alle folgenden Sicherheitsbedingungen erfüllt sind:
- Eine Löschkonfigurationsdatei, die Informationen über den Löschvorgang enthält, wurde erstellt,
- ein Aufrufparameter zum Aufrufen des Löschvorgangs wurde erfasst,
- Betriebssystemdaten, die für den weiteren Betrieb des Computersystems notwendig sind, sind nicht Bestandteil der Daten des zu löschenden Teilbereichs.

Die Löschkonfigurationsdatei enthält dabei zusätzliche Informationen zum verwendeten Löschalgorithmus und der zu löschenden Partitionen des Teilbereichs im ersten Speicher. Der Aufrufparameter stellt einen konkreten Befehlsaufruf des Löschvorgangs dar, ohne diesen der Vorgang nicht gestartet werden kann. Der Aufrufparameter wird dabei in einem automatisierten Verfahrensablauf generiert und beispielsweise in einem Programmcode übergeben. Ferner muss gewährleistet sein, dass Betriebssystemdaten, die einen weiteren Betrieb des Computersystems aufrechterhalten sollen und zur Steuerung des Computersystems auch nach dem Löschen des Teilbereichs im ersten Speicher notwendig sind, nicht im zu löschenden Teilbereich abgelegt sind. Ansonsten würden essentielle Betriebssystemdaten gelöscht, sodass ein weiterer Betrieb des Computersystems und damit eine etwaige Wiederherstellung der Daten blockiert sind. Ein anderer Grund besteht darin, dass ein sicheres Löschen von Daten des ersten Speicherbereichs nur gewährleistet ist, falls das Computersystem von einem anderen Medium aus gestartet wird, als vom zu löschenden ersten Speicher. Dann behindert sich das Betriebssystem nicht selbst und alle Daten im ersten Speicher können sicher entfernt werden.

Der Vorteil der Abfrage der vorgenannten Sicherheitsbedingungen besteht darin, dass entweder ein versehentliches Löschen zumindest des Teilbereichs des ersten Speichers verhindert wird oder ein sicheres Löschen bei aufrechterhaltener Funktion eines Betriebssystems gewährleistet ist. Ist wenigstens eine dieser drei Sicherheitsbedingungen nicht erfüllt, ist es denkbar, dass ein Benutzer oder Administrator den Löschvorgang dennoch von Hand starten kann.

Bevorzugt umfasst das Erstellen des Abbilds von Daten eine Virtualisierung, sodass das Abbild als virtuelle Umgebung ausführbar ist. Das bedeutet, dass bei einer Migration von Daten auf ein weiteres Computersystem eine Wiederherstellung und ein Zugriff auf die Daten beispielsweise in einer Laufzeitumgebung ablaufen kann, wobei die Laufzeitumgebung Teil einer so genannten Betriebssystemvirtualisierung oder einer gesamten Systemvirtualisierung ist. Der generelle Vorteil einer Virtualisierung besteht darin, dass ein gesicherter Systemzustand nach einer Migration unkompliziert in ein Gastbetriebssystem auf einem weiteren Computersystem integriert werden kann, ohne wesentliche Modifikationen am Format und der Struktur der gesicherten Daten und/oder am weiteren Computersystem vornehmen zu müssen. Dabei kann insbesondere bei einer Systemvirtualisierung durch eine virtuelle Maschine (VMM = virtual machine monitor) eine Ressourcenverteilung der Hardware des weiteren Computersystems auf virtuell ablaufende Instanzen unterschiedlicher gesicherter Systemzustände stattfinden.

Dies erlaubt beispielsweise eine Migration von Daten verschiedener Benutzer auf ein neues Computersystem mit neuen Hardwareressourcen, wobei das Erscheinungsbild der wiederhergestellten Systemzustände nach außen für die Benutzer unverändert ist. Somit wird für jeden Benutzer seine gewohnte Arbeitsumgebung an einem Computersystem beibehalten, obwohl im Hintergrund Systemänderungen durchgeführt wurden.

Bevorzugt wird der Umfang der Daten, welche zum Erstellen des Abbildes herangezogen werden, vorbestimmt. Ein Benutzer oder Administrator kann dabei flexibel und individuell entscheiden, welche Daten zur Sicherung und Wiederherstellung herangezogen werden sollen. Dabei kann beispielsweise unterschieden werden, ob alle an einem Computersystem angemeldeten Benutzer mit allen ihren Systemeinstellungen oder nur ausgewählte Benutzer mit individuellen Systemeinstellungen in eine Datensicherung einbezogen werden. Ferner kann entschieden werden, ob sämtliche Daten, also alle gespeicherten Daten sowie Einstellungen am System oder den installierten Applikationen, oder lediglich ausgewählte Daten gesichert werden.

Bevorzugt wird das Abbild beim Erstellen verschlüsselt, wobei Informationen über die Verschlüsselung des erstellten Abbildes erfasst werden. Eine Verschlüsselung hat dabei den Vorteil, dass eine spätere Wiederherstellung nur durch autorisierte Personen durchgeführt werden kann, die eine Entschlüsselung des Abbildes durchführen können. Somit wird unterbunden, dass unbefugte Personen Zugriff auf vertrauliche Daten erlangen oder unkontrollierte Wiederherstellungen auf beliebigen Computersystemen möglich sind. Zur Nachvollziehbarkeit des Verschlüsselungsvorgangs werden Informationen darüber erfasst und gespeichert. Es können dabei sämtliche denkbare Methoden zur Verschlüsselung angewendet werden. So wäre beispielsweise ein asymmetrisches Verschlüsselungsverfahren denkbar, bei dem das erstellte Abbild der zu sichernden Daten mit einem öffentlich bekannten Schlüssel verschlüsselt wird und lediglich von einer autorisierten Person mit einem öffentlich nicht bekannten, privaten Schlüssel entschlüsselt werden kann. Auch Anwendungen von sogenannten Hash-Verfahren zur Verifikation der Datenintegrität und fehlerfreien Erfassung der Daten sind anwendbar.

Vorzugsweise werden Informationen über mögliche Fehlerquellen während der Durchführung des Verfahrens und deren Schweregrad erfasst. Dies hat den Vorteil, dass ein Benutzer vor Durchführung des Verfahrens einstellen kann, unter welchen Bedingungen ein Arbeitsschritt des Verfahrens abgebrochen wird. So kann er beispielsweise entscheiden, dass das Verfahren nur bei sicherheitskritischen Fehlern abgebrochen wird.

Vorzugsweise werden Zugriffsinformationen über den zweiten Speicher, in dem das erstellte Abbild gespeichert werden soll, erfasst. Dabei wird hinterlegt, über welche Speicheradresse der zweite Speicher angesprochen werden kann und um welche Art Speicher es sich handelt, beispielsweise eine interne weitere Partition im Quellcomputersystem oder ein Netzlaufwerk in einem Firmennetzwerk. Generell hat dies den Vorteil, dass bei einer späteren Wiederherstellung von Daten der zweite Speicher, auf dem das erstellte Abbild gespeichert ist, schneller und einfacher identifiziert werden kann.

Bevorzugt werden Informationen über die Reihenfolge des Hochfahrens von Einzelkomponenten im Computersystem oder im weiteren Computersystem erfasst. Im Verlauf des Verfahrens treten Situationen auf, in denen die Boot-Reihenfolge, also das Hochfahren von Einzelkomponenten, verändert werden muss. Dies ist beispielsweise vor dem Löschen der Daten im Teilbereich des ersten Speichers der Fall, falls von einem anderen Medium als der zu löschenden Partition gestartet werden soll. Auch nach dem Löschen der Quelldaten kann ein Verändern der Boot-Reihenfolge erforderlich sein, falls anstatt von einer Festplatte von CD gestartet werden soll, um z.B. ein neues Betriebssystem zu installieren.

Somit muss gegebenenfalls das Hochfahren eines weiteren Mediums in der Reihenfolge vor das Hochfahren der zu löschenden Festplatte gestellt werden, damit von dem weiteren Medium aus eine Betriebssystemumgebung gestartet werden kann, über die weitere Verfahrensschritte durchgeführt werden können. Alle Informationen über eine veränderte Reihenfolge des Hochfahrens von Einzelkomponenten werden erfasst und hinterlegt, sodass gegebenenfalls Einstellungen rückgängig gemacht werden können und/oder Änderungen nachvollziehbar sind.

Vorzugsweise kann die Reihenfolge des Hochfahrens von Einzelkomponenten des Computersystems oder des weiteren Computersystems während des Verfahrens über einen Treiber-Baustein verändert werden. Das bedeutet, dass das Ändern der Reihenfolge des Hochfahrens automatisiert innerhalb des Verfahrens durchgeführt werden kann, ohne dass ein Benutzer oder Administrator den Verfahrensverlauf überwachen und derartige Einstellungen manuell vornehmen muss. Ein automatisiertes Ändern der Boot-Reihenfolge erfordert Zugriff auf das System-BIOS (BIOS = Basic Input Output System). Der Zugriff auf das BIOS kann beispielsweise durch einen speziellen Management-Treiber, also einen Software-Baustein, durchgeführt werden. Beispielsweise kann hier ein so genannter WMI-Treiber (WMI = Windows Management Instrumentation) Anwendung finden, durch den eine Verwaltung des Systems, eine Inventarisierung der Hardware oder auch Fernwartungsaufgaben durchgeführt werden können. Es ist auch denkbar, jegliche andere Art von BIOS-Treibern einzusetzen.

Vorzugsweise wird eine Steuerdatei zur automatisierten Ablaufsteuerung des Verfahrens erstellt, die Informationen über die durchzuführenden Verfahrensschritte enthält. Das Einrichten einer Steuerdatei hat den Vorteil, dass sämtliche vorgenannten Informationen in der Steuerdatei hinterlegt werden können. Solche Informationen umfassen insbesondere die Konfiguration der gewünschten Arbeitsvorgänge (Sicherung, Wiederherstellung, Löschen der ersten Speicher, Virtualisierung) sowie dazugehörige Informationen, wie zum Beispiel den Umfang der zu migrierenden Daten, den Speicherort der gesicherten Daten, eine mögliche Verschlüsselung dieser Daten, die Einordnung des Schweregrads potentieller Fehlerquellen oder das Festlegen einer geänderten Boot-Reihenfolge vor oder nach dem Löschvorgang.

Somit kann der Verfahrensverlauf mit allen seinen Auswirkungen auf die Migration komfortabel und individuell von einem Benutzer oder Administrator im Vorhinein vorgegeben werden. Das Verfahren wird anschließend über die Steuerdatei gesteuert. Ein Benutzer muss nach dem Erstellen der Steuerdatei das Verfahren lediglich starten, jedoch während des Verfahrensablaufs keine kritischen Entscheidungen mehr treffen. Somit werden fehlerhafte Verläufe durch Entscheidungsschwierigkeiten während des Verfahrens unterbunden.

Zusätzlich werden bevorzugt der Verfahrensablauf, der Status aller Verfahrensschritte sowie mögliche aufgetretene Fehler in einer Dokumentationsdatei hinterlegt. Die Dokumentationsdatei kann dabei Bestandteil der Steuerdatei oder eine separate Datei sein. Die Dokumentationsdatei erlaubt einem Administrator, den gesamten Verlauf des Verfahrens auch nachträglich nachzuvollziehen und gegebenenfalls aufgetretene Fehler zu erkennen. Die Dokumentationsdatei beschreibt demnach ein Protokoll des Verfahrensablaufs. Dies hat den Vorteil, dass bei einem fehlerhaften Abbruch des Verfahrens eine Dokumentation vorliegt. Ein weiterer Vorteil besteht darin, dass eine Dokumentationsdatei eines Verfahrens, bei dem nur ein Teil der Arbeitsschritte durchgeführt wurde, im Nachhinein ausgelesen werden kann, sodass weitere nachfolgende Verfahrensschritte, zum Beispiel ein Wiederherstellen der Daten nach einer Sicherung, problemlos durchgeführt werden können. Auch bei Unterbrechung des Verfahrens kann die Dokumentationsdatei jederzeit geladen und der Status des Verfahrensablaufs abgerufen werden. Tritt beispielsweise ein Fehler auf oder wurde das Verfahren vor Abschluss eines Arbeitsschrittes abgebrochen, so kann der betroffene Arbeitsschritt anhand der Dokumentationsdatei ermittelt und gegebenenfalls über die Steuerdatei neu gestartet werden.

Es ist denkbar, die Dokumentationsdatei beispielsweise per E-Mail verschlüsselt an einen Administrator innerhalb eines Firmennetzwerks zu verschicken. Im Falle, dass die Daten des Abbildes durch ein Passwort geschützt wurden, wird dieses Passwort mit einem eigenen Zertifikat verschlüsselt, sodass ein Wiederherstellen im Servicefall möglich ist, falls ein Benutzer sein Passwort vergessen hat. Auch diese Informationen können in der Dokumentationsdatei beziehungsweise in der vorgenannten Steuerdatei abgelegt werden.

In einem weiteren Aspekt wird die Aufgabe durch ein Computerprogramm zur Migration von Daten gelöst, welches auf einem Computersystem abläuft und dabei ein vorgenanntes Verfahren durchführt. Das Computerprogramm kann dabei beispielsweise eine grafische Benutzeroberfläche (GUI = graphical user interface) zur Verfügung stellen, über die beispielsweise eine vorgenannte Steuerdatei komfortabel erstellt werden kann, was den Arbeitsaufwand gering hält. Ferner kann ein Benutzer über die GUI zwischen einzelnen Verfahrensschritten von Hand navigieren, sofern dies gewünscht ist. Somit können sämtliche Voreinstellungen zum Verfahrensablauf durchgeführt werden und gegebenenfalls Arbeitsschritte per Hand gesteuert, wiederholt oder übersprungen werden.

Weitere vorteilhafte Ausführungen werden in der nachfolgenden Figurenbeschreibung offenbart.

Die Erfindung wird anhand von drei Figuren näher erläutert. Dabei zeigt:
- Figur 1: ein schematisiertes Ablaufdiagramm einer Konfiguration des Verfahrens,
- Figur 2: ein schematisiertes Ablaufdiagramm einer Datensicherung und
- Figur 3: ein schematisiertes Ablaufdiagramm einer Wiederherstellung von gesicherten Daten.

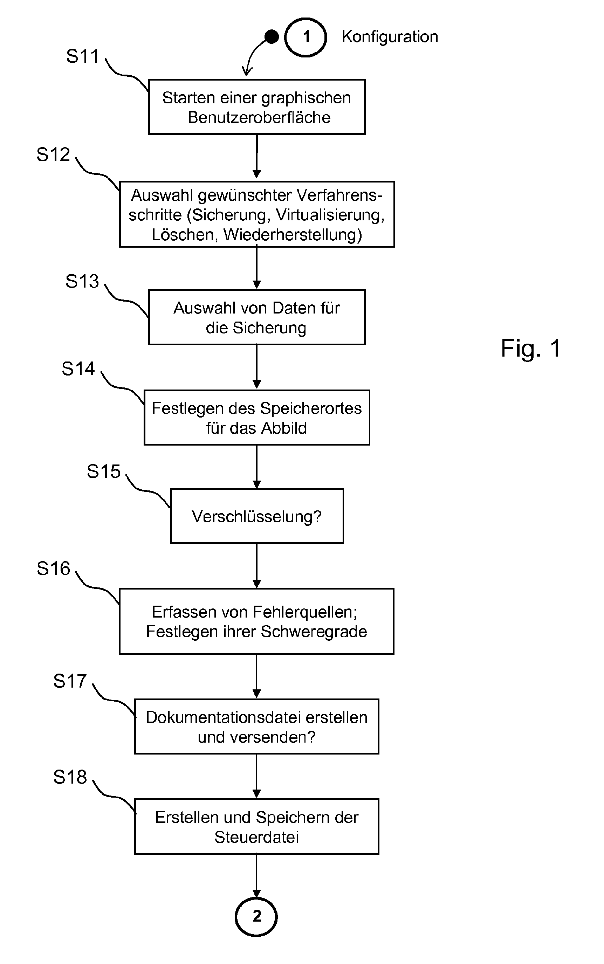

Figur 1 zeigt ein schematisiertes Ablaufdiagramm einer Konfiguration eines automatisierten Verfahrens zur Migration von Daten gemäß der beschriebenen Art und Weise. Die Konfiguration stellt dabei die Initialisierung des Verfahrens dar, bevor die eigentliche Migration eines Systemzustands durchgeführt wird. Somit kann ein Benutzer oder Administrator vor Beginn des Verfahrens sämtliche Einstellungen und individuellen Vorgaben durchführen, anhand derer das nachfolgende Verfahren automatisiert abläuft. Während der Konfiguration legt der Benutzer oder Administrator also sämtliche Parameter und Wunscheinstellungen fest, die abschließend in einer Steuerdatei hinterlegt werden. Die initialisierte Steuerdatei bildet daher den Ausgangspunkt zur Ablaufsteuerung des Verfahrens.

In einem ersten Schritt S11 kann ein Benutzer beispielsweise eine grafische Benutzeroberfläche als GUI starten. Über die GUI, die dem Benutzer beispielsweise über einen Bildschirm des Computersystems dargestellt wird, können sämtliche Einstellungen vorgenommen und gegebenenfalls durch die einzelnen Verfahrensschritte navigiert werden. Zunächst legt der Benutzer im Schritt S12 fest, welche gewünschten Verfahrensschritte auf welche Art und Weise durchgeführt werden sollen. Der Benutzer hat dabei insbesondere die Auswahl zwischen der Sicherung der Daten, einer möglichen Virtualisierung der Daten, dem Löschen der Quelldaten und der Wiederherstellung der gesicherten Daten. Sollen die Quelldaten auf dem Quellcomputersystem nicht gelöscht werden, so kann er diesen Verfahrensschritt ignorieren. Für die Wiederherstellung kann die Adresse eines Zielcomputersystems bestimmt werden. Es ist auch denkbar, dass ein Verfahren zur Datenmigration lediglich die Datensicherung, Virtualisierung und das Löschen der ursprünglichen Daten beinhaltet. Eine Wiederherstellung kann dann mit Hilfe der erstellten Steuerdatei und gegebenenfalls einer Dokumentationsdatei in späteren Verfahrensschritten durchgeführt werden.

In einem weiteren Schritt S13 erfolgt die Auswahl von Daten für die Sicherung. Hier bestimmt der Benutzer, welche Daten in das Abbild des Systemzustands aufgenommen werden sollen. Er kann beispielsweise entscheiden, ob sämtliche am Computersystem angemeldeten und registrierten Benutzer mit all ihren gespeicherten Daten oder lediglich einzelne Benutzer mit individuell vorgegebenen Daten berücksichtigt werden.

Im nachfolgenden Schritt S14 legt der Benutzer den Speicherort, also den zweiten Speicher fest, auf dem das Abbild der zu sichernden Daten gespeichert werden soll. Der zweite Speicher kann beispielsweise eine weitere Partition einer Festplatte im Computersystem, ein Netzlaufwerk, eine USB-Festplatte oder jeglicher anderer nichtflüchtiger Massenspeicher sein, der zum Beispiel über eine P2P-Verbindung zu einem weiteren Computersystem angesprochen wird. Generell kann der zweite Speicher bereits Bestandteil des Zielcomputersystems sein, muss es aber nicht.

Im Schritt S15 legt der Benutzer schließlich fest, ob das Abbild verschlüsselt werden soll oder nicht. Dabei können auch Art und Umfang sowie Sicherheitskriterien einer möglichen Verschlüsselung festgelegt werden. Auch der Austausch oder die Hinterlegung von öffentlichen und privaten Schlüsseln wäre hier denkbar.

Ein weiterer wesentlicher Schritt S16 stellt das Erfassen von möglichen Fehlerquellen während des Verfahrensablaufs sowie das Festlegen ihrer Schweregrade dar. Dadurch wird bestimmt, welche Fehler auftreten dürfen und welche kritischen Fehler zu einem Abbruch des Verfahrens führen. Es ist denkbar, das Computersystem beispielsweise einer Hardware- und Softwareprüfung zu unterziehen, wodurch die Kompatibilität zwischen der Hardware und der Software sowie mögliche Fehlerquellen in deren Kommunikation erfasst werden. Weiter können dem Benutzer mögliche Alternativen aufgezeigt werden, die bei Auftreten eines Fehlers mit einem bestimmten Schweregrad durchgeführt werden sollen. Ziel dieser Einstellung und Vorgabe ist es also, einen möglichst fehlerfreien und flüssigen Verfahrensablauf zu gewährleisten.

Schließlich wird in einem Schritt S17 eine Dokumentationsdatei erstellt und festgelegt, ob diese beispielsweise an einen Administrator per E-Mail versendet werden soll. Auch eine mögliche Verschlüsselung der Dokumentationsdatei kann hier festgelegt werden. Die Dokumentationsdatei dient dazu, ähnlich einem Protokoll den Status der jeweiligen Verfahrensschritte festzuhalten. Somit dient die Dokumentationsdatei der nachträglichen Auswertung und Analyse des durchgeführten Verfahrens.

Abschließend wird in einem Schritt S18 der Konfiguration automatisch eine Steuerdatei erstellt und idealerweise an einem Speicherort gespeichert, auf den im weiteren Verfahrensverlauf automatisch zugegriffen werden kann. Die Steuerdatei umfasst also sämtliche vorgenannten Konfigurationsschritte und deren ausgewählte Parameter. Die Steuerdatei kann nachfolgend immer wieder aufgerufen werden und dient zur Ablaufsteuerung des Verfahrens.

Somit ist es einem Administrator möglich, unterschiedliche Steuerdateien für unterschiedliche Systeme oder Anforderungen zu erstellen und diese in unterschiedlichen Migrations-Szenarien über ein und dasselbe Verfahren aufzurufen. Der weitere Vorteil von Steuerdateien besteht darin, dass der Verfahrensverlauf im Vorhinein festgelegt werden kann, ohne dass ein Administrator den Verlauf überwachen und gegebenenfalls eingreifen muss. Das Migrationsverfahren ist damit vollständig automatisierbar.

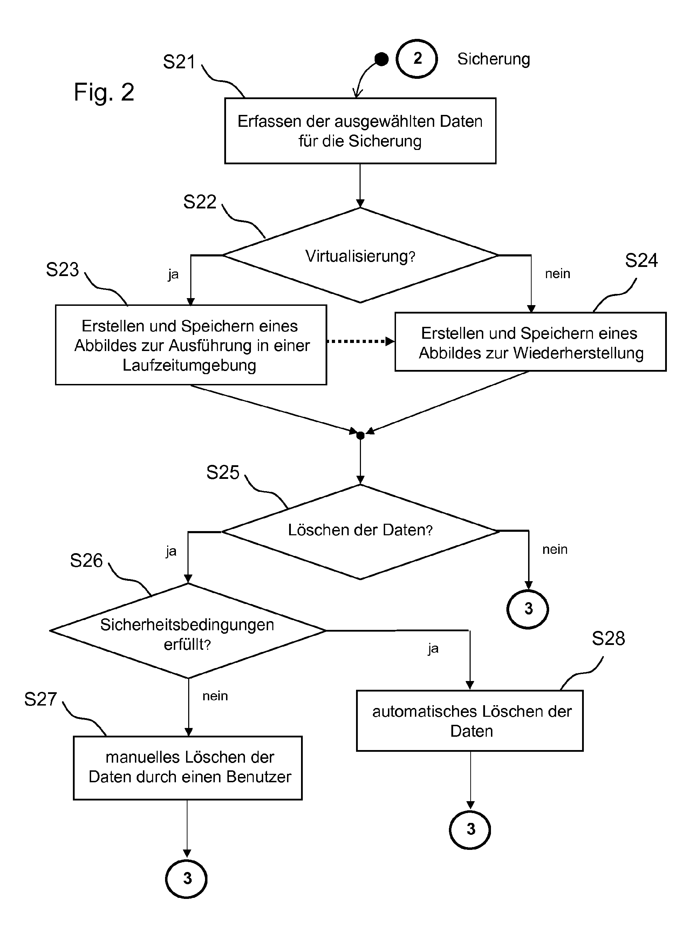

Figur 2 zeigt ein schematisiertes Ablaufdiagramm der eigentlichen automatisierten Verfahrensschritte nach der Konfiguration gemäß Figur 1. Insbesondere stellt Figur 2 die Sicherung von ausgewählten Daten dar. Zunächst werden in einem Schritt S21 die ausgewählten Daten für die Sicherung erfasst. Dies umfasst insbesondere das Ermitteln aller Speicherbereiche, die wesentliche Daten für die Sicherung enthalten. Diese Informationen werden anschließend gebündelt und eine Datensicherung vorbereitet.

In einem weiteren Schritt S22 erfolgt die Überprüfung, ob in einer Konfiguration gemäß Figur 1, insbesondere im Schritt S12, eine Virtualisierung des zu erstellenden Abbildes angestrebt wurde oder nicht. Ist dies der Fall, so wird die eigentliche Sicherungsprozedur gestartet und ein Abbild zur Ausführung in einer Laufzeitumgebung einer virtuellen Maschine erstellt und anschließend im zweiten Speicher gespeichert. Es wird hier noch mal darauf hingewiesen, dass der zweite Speicher nicht Bestandteil des ersten Speichers ist, aus dem die Daten für die Sicherung ausgewählt werden. Denn im Falle einer späteren Löschung des ersten Speichers würden somit auch die gesicherten Daten des erstellten Abbildes verloren gehen. Nach dem Erstellen und Speichern des Abbildes bei aktivierter Virtualisierung kann ein gesicherter Systemzustand in einer Laufzeitumgebung, die beispielsweise durch eine virtuelle Maschine (VMM) zur Verfügung gestellt wird, als virtuelle Umgebung ausgeführt werden.

Im Falle, dass keine Virtualisierung in der Konfiguration gemäß Figur 1 aktiviert wurde, so wird in einem Schritt S24 ein Abbild erstellt und gespeichert, welches zur Wiederherstellung eines Systemzustands zur Verfügung steht, wobei der Systemzustand in einem Betriebssystem auf physikalisch ansteuerbarer Hardware ohne Virtualisierungsumgebung ausgeführt werden kann.

Es ist auch denkbar, bei aktivierter Virtualisierung neben einem virtuellen Abbild der Daten auch ein Abbild der Daten gemäß dem Schritt S24 zu erstellen. So werden parallel zwei Abbilder erstellt. Dieser Alternativvorgang ist durch einen gestrichelten Pfeil vom Schritt S23 auf Schritt S24 dargestellt.

Nach den Schritten S23 und/oder S24 wurden die ausgewählten Daten für die Sicherung in Form eines oder zweier Abbilder des Systemzustands eines Quellcomputersystems gesichert und vom ersten Speicher auf einen weiteren zweiten Speicher transferiert.

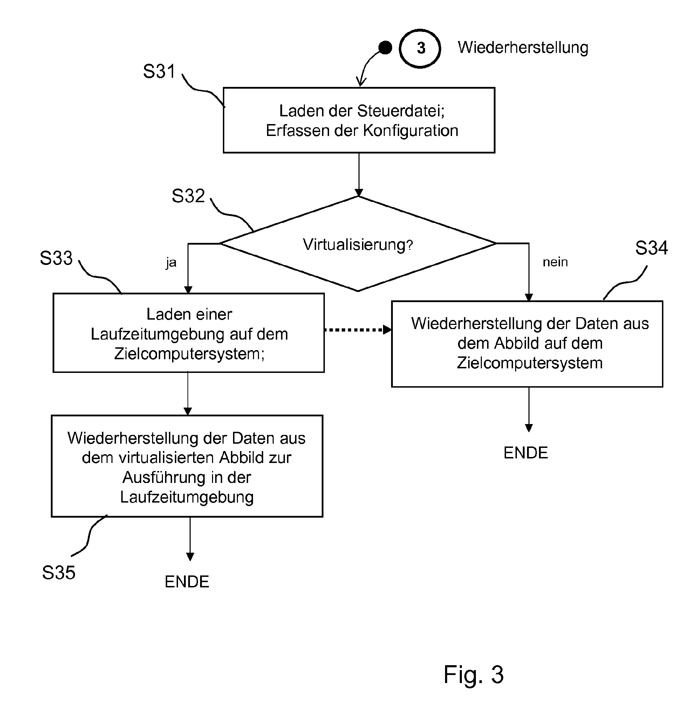

In einem nächsten Schritt S25 wird schließlich abgefragt, ob ein Löschen der Quelldaten des ersten Speichers erwünscht war oder nicht. Falls kein Löschen der Daten erwünscht war, so springt das Verfahren zum Arbeitsschritt 3, welcher in Figur 3 näher erläutert wird. Ist ein Löschen jedoch beabsichtigt, so wird im Schritt S26 überprüft, ob Sicherheitsbedingungen zum Löschen erfüllt sind. Diese Sicherheitsbedingungen umfassen insbesondere die Überprüfung, ob eine Löschkonfigurationsdatei erstellt wurde, welche Informationen über den Löschvorgang enthält. Entsprechende Informationen können beispielsweise den zu verwendenden Löschalgorithmus und vor allem die zu löschenden Partitionen des ersten Speichers umfassen. Weiterhin umfassen die Sicherheitsbedingungen das Überprüfen, ob ein Aufrufparameter zum Aufrufen des Löschvorgangs erfasst wurde. Innerhalb eines Programmablaufs des Verfahrens muss also ein Befehl zum Löschen explizit aufgerufen werden, wodurch ein versehentliches Löschen verhindert werden soll. Ferner umfassen die Sicherheitsbedingungen das Sicherstellen, dass Betriebssystemdaten, die für den weiteren Betrieb des Computersystems notwendig sind, kein Bestandteil der Daten des zu löschenden Teilbereichs im ersten Speicher sind. Andernfalls könnte das Computersystem nach dem Löschen der Daten im ersten Speicher nicht mehr gesteuert werden, sodass weitere Verfahrensschritte, insbesondere die Wiederherstellung von Daten, blockiert sind. Oder es könnten die Daten nicht vollständig und sicher gelöscht werden, da sich ein auf dem ersten Speicher befindliches Betriebssystem selbst blockieren würde.

Es wäre beispielsweise denkbar, dass zur weiteren Steuerung des Computersystems ein Betriebssystem von einer Live-CD aus gestartet wird, sodass ein Zugriff während eines Löschvorgangs auf den ersten Speicher des Computersystems problemlos durchgeführt werden kann. Eine derartige Betriebssystemumgebung auf einer Live-CD ist beispielsweise das sogenannte Windows Preinstallation Environment (Windows PE). Ist zumindest eine der drei Sicherheitsbedingungen nicht erfüllt, so kann ein automatisiertes Löschen der Daten nicht durchgeführt werden. Es ist dann denkbar, dass auf einer GUI in einem Computerprogramm während der Durchführung des Verfahrens entsprechende Hinweise gegeben werden, wobei ein Benutzer die Möglichkeit erhält, den Löschvorgang dennoch von Hand durchzuführen. Dies kann im Schritt S27 durchgeführt werden.

Sind jedoch alle Sicherheitsbedingungen für ein automatisiertes Löschen erfüllt, so wird dieses im Schritt S28 durchgeführt. Dabei ist denkbar, dass gegebenenfalls die Boot-Reihenfolge von Einzelkomponenten des Computersystems derart verändert wird, dass von einem anderen Medium, beispielsweise einer Live-CD mit Windows PE, neu gestartet werden kann, als von der primären oder zu löschenden Partition des ersten Speichers. Somit ist ein sicheres Löschen ermöglicht. Das automatische Ändern der Boot-Reihenfolge kann beispielsweise durch einen WMI-Treiber realisiert werden, der automatisiert auf das BIOS zugreift und die Boot-Reihenfolge ändert. Anschließend wird das System automatisch neu gestartet. Neben der Betriebssystemumgebung befindet sich auf der Live-CD auch ein Computerprogramm zum Durchführen des Migrationsverfahrens, sodass weitere Verfahrensschritte durchgeführt werden können.

In Figur 2 wurden also eine automatisierte Sicherung von Daten durch Erstellen eines Abbildes und Speichern eines Abbildes auf einem Massenspeicher sowie gegebenenfalls das Löschen der nicht mehr benötigten Quelldaten bei Berücksichtigung einer zuverlässigen Boot-Reihenfolge der Einzelkomponenten realisiert. Weitere Verfahrensschritte werden schließlich in Figur 3 näher erläutert.

Figur 3 zeigt ein schematisiertes Ablaufdiagramm zur Wiederherstellung von Daten eines Systemzustands nach dem Erfassen und Sichern eines Abbildes von Zustandsdaten gemäß Figur 2. Die Wiederherstellung gemäß Figur 3 kann dabei unmittelbar nach den genannten Verfahrensschritten aus Figur 2 oder aber auch erst nach einer Veränderung oder Modifikation eines Zielcomputersystems durchgeführt werden. Eine derartige Modifikation wäre beispielsweise die Installation eines neuen Betriebssystems, welche über eine CD oder über eine P2P-Verbindung zu einem weiteren Computersystem durchgeführt werden kann. Es ist auch denkbar, ein so genanntes PXE-Verfahren (PXE = Preboot Execution Environment) durchzuführen, sodass das Computersystem über Netzwerk hochgefahren und gegebenenfalls eine Steuerung über ein Betriebssystem oder eine Installation eines neuen Betriebssystems durchgeführt werden können. Weitere Modifikationen können die Veränderung und Aufrüstung neuer Hardware umfassen.

Nach diesen etwaigen Modifikationen kann eine weitere Wiederherstellung der Daten folgendermaßen ablaufen. In einem Schritt S31 wird die Steuerdatei zur Ablaufsteuerung des Verfahrens ermittelt und geladen. Somit wird die Konfiguration des weiteren Verfahrensablaufs erfasst. Dies umfasst auch die Ermittlung der Zugriffsinformationen des zweiten Speichers, in dem das gesicherte Abbild des Systemzustands liegt. Der Zugriff auf den zweiten Speicher kann auch durch einen Benutzer initiiert werden, der den zweiten Speicher beispielsweise am Zielcomputersystem manuell einbindet. Ein konkreter Zugriff auf den zweiten Speicher erfolgt dann jedoch automatisiert über das weitere Verfahren. Idealerweise ist auch die Steuerdatei im zweiten Speicher abgelegt, sodass sie leicht identifiziert und gefunden werden kann.

In einem Schritt S32 wird abgefragt, ob eine Virtualisierung durchgeführt wurde oder nicht. Ist dies der Fall, so wird in einem Schritt S33 eine Laufzeitumgebung geladen, sodass ein gesichertes Abbild nach Wiederherstellung auf dem Zielcomputersystem innerhalb der Laufzeitumgebung ablaufen kann. Sind alle Vorbereitungen für ein Einbinden des virtuellen Abbildes in das Zielcomputersystem getroffen, so kann in einem Schritt S35 die Wiederherstellung der Daten aus dem virtualisierten Abbild zur Ausführung in der Laufzeitumgebung abgeschlossen werden. Die Daten werden dabei aus dem Abbild extrahiert und im Rahmen der Systemvirtualisierung in die Laufzeitumgebung eingebunden. Ferner werden sämtliche Benutzerpasswörter geladen und gegebenenfalls ein neues Benutzerkonto mit den gesicherten Benutzerdaten erstellt. Anschließend kann ein Benutzer beispielsweise auf ein virtuelles Laufwerk mit all seinen Benutzerdaten zugreifen. Das Verfahren ist danach beendet.

Wurde jedoch keine Virtualisierung des erstellten Abbilds vorgenommen, so wird nach dem Schritt S32 in dem Schritt S34 gewechselt. Dieser Schritt beinhaltet die Wiederherstellung der Daten aus dem Abbild auf dem Zielcomputersystem, sodass auf physikalischer Hardware ohne Virtualisierung mit Hilfe eines Betriebssystems auf dem Zielcomputersystem ein gesicherter Systemzustand mit Benutzerdaten und gespeicherten Daten zur Verfügung steht. Gegebenenfalls erfolgt eine Anpassung des Datenformats sowie der Struktur der wiederhergestellten Daten, sodass der gesicherte Systemzustand an das neue Zielcomputersystem angepasst ist und fehlerfrei darauf abläuft. Auch danach ist das Verfahren beendet.

Im Falle einer parallelen Sicherung eines virtuellen Abbildes zur Ausführung in einer Laufzeitumgebung und eines Abbildes zur Wiederherstellung auf einem physikalischen System gemäß Figur 2 kann eine Wiederherstellung gemäß Figur 3 auch die parallele Widerherstellung der beiden Abbilder umfassen. Dies ist durch einen gestrichelten Pfeil in Figur 3 vom Schritt S33 zu Schritt S34 dargestellt.

Durch ein vorgestelltes Verfahren gemäß den Figuren 1 bis 3 kann somit ein Systemzustand, insbesondere Daten aus einem ersten Speicher eines Computersystems automatisiert vom ersten Computersystem auf ein weiteres Computersystem oder auf dasselbe Computersystem mit dem gleichen oder einem neuen Betriebssystem migriert werden. Nach Beenden des Verfahrens steht einem Benutzer somit der ursprüngliche Systemzustand auf einem veränderten System zur Verfügung, sodass er ohne Hindernisse oder Veränderungen weiter in der gewohnten Systemumgebung arbeiten kann. Dabei kann ein Abbild auch virtualisiert werden, sodass der Systemzustand in einer Laufzeitumgebung einer virtuellen Maschine ausführbar ist.

### Bezugszeichenliste

- S11 bis S18: Schritte zur Konfiguration
- S21 bis S28: Schritte zur Datensicherung
- S31 bis S35: Schritte zur Wiederherstellung

## Patentansprüche

1. Verfahren zur Migration von Daten eines Computersystems, umfassend die Schritte:
- Erstellen eines Abbilds von Daten, die in einem ersten Speicher des Computersystems gespeichert sind,
- Speichern des erstellten Abbilds in einem zweiten Speicher, der nicht Bestandteil des ersten Speichers ist,
- Wiederherstellen aller Daten aus dem erstellten Abbild auf dem Computersystem oder auf einem weiteren Computersystem.

2. Verfahren nach Anspruch 1,
wobei nach dem Speichern des erstellten Abbilds im zweiten Speicher die Daten zumindest in einem Teilbereich des ersten Speichers im Computersystem automatisch gelöscht werden.

3. Verfahren nach Anspruch 2,
wobei ein automatisches Löschen nur möglich ist, falls alle folgenden Sicherheitsbedingungen erfüllt sind:
- Eine Löschkonfigurationsdatei, die Informationen über den Löschvorgang enthält, wurde erstellt,
- ein Aufrufparameter zum Aufrufen des Löschvorgangs wurde erfasst,
- Betriebssystemdaten, die für den weiteren Betrieb des Computersystems notwendig sind, sind nicht Bestandteil der Daten des zu löschenden Teilbereichs.

4. Verfahren nach Anspruch 1 bis 3,
wobei das Erstellen des Abbilds von Daten eine Virtualisierung umfasst, sodass das Abbild als virtuelle Umgebung ausführbar ist.

5. Verfahren nach einem der Ansprüche 1 bis 4,
wobei der Umfang der Daten, welche zum Erstellen des Abbildes herangezogen werden, vorbestimmt wird.

6. Verfahren nach einem der Ansprüche 1 bis 5,
wobei das Abbild beim Erstellen verschlüsselt wird und Informationen über die Verschlüsselung des erstellten Abbildes erfasst werden.

7. Verfahren nach einem der Ansprüche 1 bis 6,
wobei Informationen über mögliche Fehlerquellen während der Durchführung des Verfahrens und deren Schweregrad erfasst werden.

8. Verfahren nach einem der Ansprüche 1 bis 7,
wobei Zugriffsinformationen über den zweiten Speicher, in dem das erstellte Abbild gespeichert werden soll, erfasst werden.

9. Verfahren nach einem der Ansprüche 1 bis 8,
wobei Informationen über die Reihenfolge des Hochfahrens von Einzelkomponenten im Computersystem oder im weiteren Computersystem erfasst werden.

10. Verfahren nach einem der Ansprüche 1 bis 9,
wobei die Reihenfolge des Hochfahrens von Einzelkomponenten des Computersystems oder des weiteren Computersystems während des Verfahrens über einen Treiber-Baustein verändert werden kann.

11. Verfahren nach einem der Ansprüche 1 bis 10,
wobei eine Steuerdatei zur automatisierten Ablaufsteuerung des Verfahrens erstellt wird, die Informationen über die durchzuführenden Verfahrensschritte enthält.

12. Verfahren nach einem der Ansprüche 1 bis 11,
wobei der Verfahrensverlauf, der Status aller Verfahrensschritte sowie mögliche aufgetretene Fehler in einer Dokumentationsdatei hinterlegt werden.

13. Computerprogramm zur Migration von Daten, welches auf einem Computersystem abläuft und dabei ein Verfahren nach einem der Ansprüche 1 bis 12 durchführt.
